# EUROPEAN PATENT APPLICATION

(11) **EP 2 492 044 A1**
(43) Date of publication of application: **29.08.2012**
(21) Application number: 12152666.9
(22) Date of filing: 26.01.2012
(51) Int. Cl.: B23P 6/00, F01D 5/00, B23K 20/02, B23K 35/02, B23K 1/00, B22F 7/00, B23K 35/00

(54) **A method of repairing a component**

(30) Priority: 23.02.2011 GB 201103078
(71) Applicant: Rolls-Royce plc, London SW1E 6AT (GB)
(72) Inventor: Clark, Daniel, Derby, Derbyshire DE56 1TG (GB); Routledge, David, Derby, Derbyshire DE23 8NY (GB); Smith, Alistair, Nottingham, Nottinghamshire NG9 2HN (GB); Mei, Junfa, Melbourne, Victoria VIC3150 (AU)
(74) Representative: Roberts, Nicholas John

(57) **Abstract**

The present disclosure relates to a method of repairing a component (10). The method may comprise: removing a damaged portion (12) of the component to expose a region of the component; providing a patch (20) having a rim (22) exceeding the dimensions of the exposed region; placing the patch on the exposed region of the component such that the exposed region is covered by the patch and the rim is spaced apart from the exposed region; joining the patch to the component around the rim of the patch; and diffusion bonding the patch and the component together. The rim (22) may be spaced apart from the exposed region such that the step of joining the patch (20) to the component (10) does not affect the exposed region. The method may further comprise machining a recess (14) in the damaged region of the component. The recess (14) may be covered by the patch (20). The recess (14) may be at least partially filled with a portion (20') of the patch. A replacement feature of the component may be provided on a surface of the patch.

## Description

This invention relates to a method of repairing a component and particularly but not exclusively relates to a method of repairing a component for a gas turbine engine combustion chamber.

Gas turbine combustion chambers experience very high temperatures due to the burning gases contained within. The combustion chamber temperature may also vary over a large range of values as the engine is repeatedly started and stopped, particularly in the case of jet engines. As a result, combustion chambers, and in particular combustion chamber casings, experience high stresses and are liable to fatigue. In the event of a failure, combustion chamber casings have previously been repaired using Tungsten Inert Gas (TIG) welding, thermal spray coating or via mechanical means, for example using shank nuts.

However, current repair methods do not restore the original properties of the repaired area. Thus, if a large feature needs repairing, the current methods are inadequate. Furthermore, future combustion casings are likely to use materials which are much more susceptible to weld induced cracking. The component stress levels are also being increased due to the more capable materials being used. Existing repair methods will therefore have very limited application in future casings.

W02009001026 discloses a prior art method of repairing components in a gas turbine engine. However, the joining method disclosed therein does not comprise a joint composed entirely of wrought material and relies on melting or melting point depressants to facilitate the join. Furthermore, the joining methods disclosed in US2009031564, US5390413 and US2005139581 unduly penetrate the original component and affect the component microstructure. The resulting join is therefore compromised.

The present disclosure therefore seeks to address these issues.

According to an aspect of the present invention there is provided a method of repairing a component, the method comprising: removing a damaged portion of the component to expose a region of the component; providing a patch having a rim exceeding the dimensions of the exposed region; placing the patch on the exposed region of the component such that the exposed region is covered by the patch and the rim is spaced apart from the exposed region; joining the patch to the component around the rim of the patch; and diffusion bonding the patch and the component together.

The rim may be spaced apart from the exposed region such that the step of joining the patch to the component may not substantially affect the exposed region, e.g. chemically, thermally, structurally or in any other fashion. The step of joining the patch to the component around the rim of the patch may be performed under a vacuum. The step of diffusion bonding the patch and the component together may be performed under a vacuum. The vacuum for the joining and/or diffusion bonding steps may be provided locally to the patch.

The method may further comprise machining a recess in a damaged region of the component. The recess may be covered by the patch. The recess may be at least partially filled with a portion of the patch.

The recess may be substantially in the shape of an ellipsoid segment. The recess may be completely filled by the patch. Alternatively, the recess may be partially filled by the patch. The remainder of the recess may be filled with a powder. The powder may be made of the same material as the component, e.g. it may have the same chemical composition.

A replacement feature of the component may be provided on a surface of the patch.

The step of joining the patch to the exposed region of the component around a rim of the patch may provide a fluid tight seal between the patch and component. The step of joining the patch to the exposed region of the component around a rim of the patch may comprise welding or brazing the patch to the component.

The method may further comprise cleaning the patch and/or component.

The patch may be made of the same material as the component.

The patch and the component may be diffusion bonded together by Hot lsostatic Pressing (HIP). The patch and the component may be bonded together used the same HIP cycle as originally used to manufacture the component.

The method may further comprise removing any excess material from the patch after diffusion bonding the patch and component together. For example, the join around the rim of the patch may be substantially machined away. The method may further comprise heat treating the component and patch.

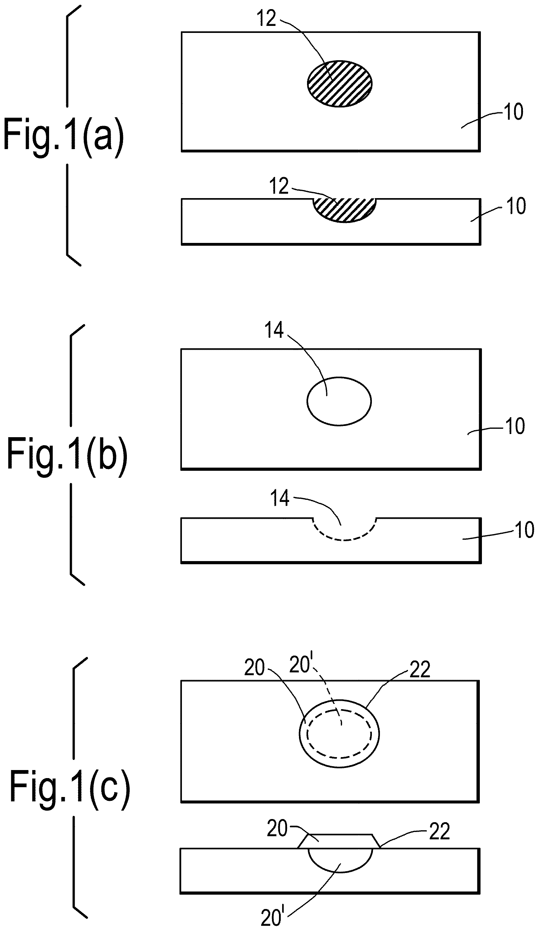

For a better understanding of the present invention, and to show more clearly how it may be carried into effect, reference will now be made, by way of example, to the accompanying drawings, in which:-
Figure 1 (a) shows both a top view and a cross-sectional view of a surface of a combustion casing with a damaged region;
Figure 1 (b) shows both a top view and a cross-sectional view of the area shown in Figure 1 (a) after the damaged region has been machined out;
Figure 1 (c) shows both a top view and a cross-sectional view of the area shown in Figure 1 (a) with a repair patch placed inside the cavity where damaged material has been machined out;

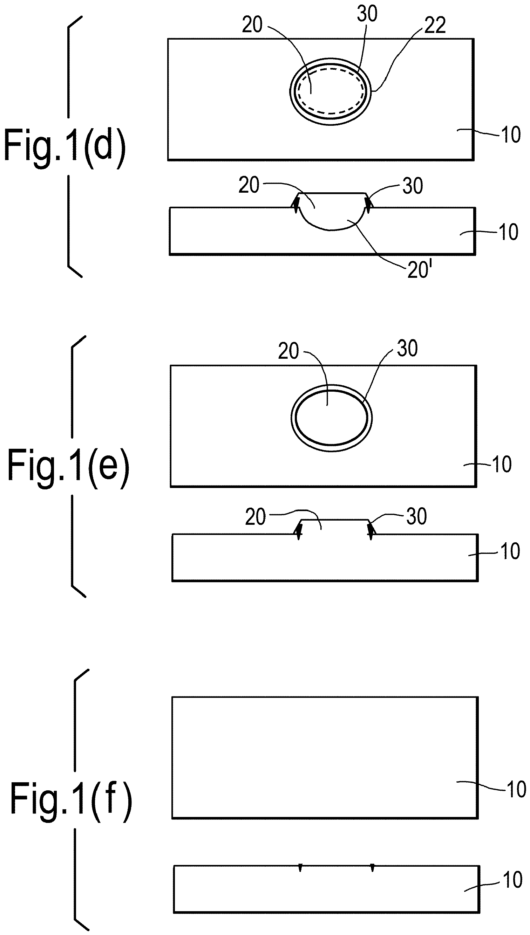

Figure 1 (d) shows both a top view and a cross-sectional view of the area shown in Figure 1 (a) after the repair patch has been welded onto the combustion casing to form a gas tight seal, so that a vacuum is retained between the patch and casing;
Figure 1 (e) shows both a top view and a cross-sectional view of the area shown in Figure 1 (a) after the repair patch has been diffusion bonded onto the casing through hot isostatic pressing; and
Figure 1 (f) shows both a top view and a cross-sectional view of the area shown in Figure 1(a) after the excess material from the patch has been machined away.

The present disclosure relates to repairing damaged combustion chamber casings, e.g. for gas turbines, but may also relate to the repair or fabrication of any other component, e.g. within a gas turbine engine. In particular, the present disclosure may apply in cases where machining out stress raising features unacceptably reduces local wall thickness. The method disclosed herein may restore parent, e.g. original or wrought, material in the damaged area.

More specifically the present disclosure may relate to a method of repairing the combustion casings of gas turbines by the solid-state addition of material similar in chemistry and microstructure to the original combustion casing material. This may be achieved by the removal of defects or stress raising features from the component, welding or brazing a patch on to the affected area, e.g. within a vacuum, then diffusion bonding the repair patch to the combustion casing through Hot lsostatic Pressing (HIP).

With reference to Figures 1(a)-(b), a method of repairing a component 10, e.g. combustor casing, may comprise removing a damaged portion 12 of the component to expose a region of the component. The damaged component may be machined such that the damaged affected area, i.e. portion 12, is removed. The removal of the damaged portion 12 may leave behind a recess 14, which may be in the form of a standard size semi-elliptical feature. For example, the recess 14 may be in the shape of a segment of an ellipsoid and as such may comprise a segment or portion of a sphere, e.g. a hemisphere or any other elliptically shaped recess. However, instead of machining out a standard elliptical hole, a bespoke feature could be machined out, e.g. for the purpose of repairing large areas.

With reference to Figure 1 (c), the method may further comprise providing a patch 20. The patch 20 may have a rim 22 exceeding the dimensions of the exposed region, e.g. the recess 14. The repair patch 20 may be made of the same material as the original component 10. The method may further comprise cleaning the patch 20 and/or component 10. For example, the repair patch 20, area within the recess 14 and immediately surrounding area may be cleaned to a level suitable for diffusion bonding.

The patch 20 may be placed on the exposed region, e.g. recess 14, of the component 10. The exposed region, e.g. recess 14, may be covered by the patch and the rim 22 may be spaced apart from the exposed region. Furthermore, in the example shown, the repair patch 20 may be shaped such that when it is placed in the recess 14, a portion 20' of the patch fills the entire recess. In other words, at least the surface of the patch 20 which engages with the component 10 may correspond in shape with the component. Furthermore, the underside of the patch 20, e.g. the overhang, may be sized and/or shaped to facilitate the manipulation and positioning of the patch prior to and/or during sealing.

The patch 20 and recess 14 may be in any shape and size and standard patches may be prepared in advance to fill standard shaped and sized recesses. By way of example, the portion 20' of the patch may be in the shape of a segment of an ellipsoid and as such may comprise a segment or portion of a sphere, e.g. a hemisphere or any other elliptically shaped portion.

With reference to Figure 1(d), the method may further comprise joining the patch 20 to the component 10 around the rim 22 of the patch 20, thereby providing a join 30, e.g. seal, between the patch 20 and component 10. The join 30 may provide a fluid tight, e.g. hermetic, seal between the patch 20 and component 10. The join 30 may be achieved by welding or brazing the patch 20 to the component 10. The join 30 may be formed with minimum penetration into the component and/or with minimum heat input into the component. Accordingly, the join 30 may form a seal around the rim of the patch without molten material penetrating into the recess 14.

As shown, the overhang provided by the overlap of the patch rim 22 over the exposed region may taper in thickness to minimise the thermal section and/or to minimise the heat intensity required for melting/wetting. The tapered rim may be in the form of a chamfer, step (e.g. top-hat type arrangement) or any other reduction in thickness around the circumference of the rim 22.

The overlap of the patch rim 22 over the exposed region may prevent liquid resulting from the sealing process about the rim having a direct passage into the final joint region, e.g. between the recess 14 and the patch 20. In addition, the heating required to form the join 30 may be localised. Such localised heating may reduce capillary flow by increasing the distance from the final joint region as molten material would have to flow across much cooler material. This increased distance allows time and space for cooling, changing of viscosity and ultimately solidification prior to encroachment into the final joint region.

The join 30 may be approximately 1 mm wide. By contrast, the overhang provided by the overlap of the patch rim 22 over the exposed region may be approximately equal to or greater than 2mm in width. In other words, the edge of the rim 22 may be 2mm or more away from the edge of the final joint, e.g. an edge of the recess 14.

The join 30 between the rim 22 of the patch 20 and the component 10 may be provided under a vacuum. Accordingly, a vacuum may exist between the patch 20 and component 10 once joined together by join 30. The vacuum may be provided locally to the patch 20, e.g. the entire component 10 may not be contained within a vacuum.

In the case of the patch 20 being joined to the component 10 by brazing, a brazing shim may be placed outside the diffusion bonding region. Brazing may take place in a vacuum and may be performed at much lower temperatures than welding.

With reference to Figure 1(e), the method may further comprise diffusion bonding the patch 20 and the component 10 together. For example, the patch and the component may be joined together by Hot Isostatic Pressing (HIP). The patch and the component may be joined together used the same HIP cycle (e.g. temperature, pressure, time) as originally used to manufacture the component. However, the repair HIP cycle could be reduced in time or temperature. Such a reduced HIP cycle may be sufficient to produce a full diffusion bond between the component and repair patch. By diffusion bonding the repair patch 20 into the recess of the component, the subsurface weld should have material properties equal to the original material. Thus, diffusion bonding the patch to the component enables a very high quality bond between the patch and the component, such that the patch may be indistinguishable from the repair. This cannot be achieved using arc welding techniques alone.

The diffusion bonding step may be performed under a vacuum and the vacuum may be provided locally to the patch. Furthermore, the vacuum for the joining step may allow the component to be diffusion bonded in a HIP vessel without having to encapsulate the whole component, which would be prohibitively expensive.

With reference to Figure 1(f), the method may further comprise removing any excess material from the patch 20 after diffusion bonding the patch 20 and component 10 together. For example, the join 30 around the rim of the patch 20 may be, at least partially, removed from the component 10. The microstructure affected by the provision of the join 30 (for example the melt isotherm or the metallographically determined Heat Affected Zone (as determined by a representative sample)) may be removed by machining, e.g. to a depth to ensure complete removal. The excess material may be removed by machining and the machining may be chip-less or chip-forming.

However, some material proud of the original surface of the component 10 may be left on the component to locally reinforce the region. The material removed from the patch 20 may be substantially less than the depth of the material added, e.g. a portion of the rim 22 may remain. The repair patch 20 may be blended into the component 10. The final profile may be achieved by blending and/or adaptive machining and may include polishing or abrasive blasting. The material removal may not compromise the design requirements of the component.

The method may further comprise heat treating the component 10 and patch 20, for example to restore the component's original mechanical properties and to appropriately age any welded or brazed material. The heat treating may be carried out after the diffusion bonding cycle. Depending on the requirements for dimensional tolerances in the repaired area, the heat treating may be carried out before or after the machining to remove any excess material from the patch 20.

Finally, the effectiveness of the repair may be tested, e.g. using nonDestructive Testing (NDT). For example, Fluorescent Penetrant Inspection (FPI), X-ray, ultrasound and thermography techniques may be deployed to check the repair.

The present disclosure may relate to a solid state, metal addition process, primarily designed for repair. The material added during the process disclosed herein may be used in a load bearing capacity, which is not the case for material added using current repair techniques. Accordingly, an advantage of the present disclosure over current repair methods is that the material added by the method disclosed herein may be used in a load bearing capacity. Furthermore, fusion welding addition methods are likely to cause cracks in the component, either during welding, heat treatment or in service.

The present disclosure could be applied to any component where a patch may be joined to a damaged region and subsequently diffusion bonded. The invention is particularly applicable to components that were originally diffusion bonded and require repair of damaged regions.

In an alternative method (not shown), the recess may only be partially filled by the patch and the remainder of the recess may be filled with a powder. The powder may have the same composition as the original component, e.g. casing powder feedstock. The method may otherwise proceed as described above.

In a further alternative method (not shown) the patch may deform into the recess during the HIP cycle, thereby filling the recess.

The method disclosed herein may also be used to repair protruding parts, e.g. bosses, or any other features that are proud of a component surface. For example, the feature to be repaired may be machined flush, e.g. removed from the surface of the component, and a replacement feature may be provided on the outer facing surface of a patch. The patch with the replacement feature may comprise a rim shaped to fit on the component. The component may not have a recess formed in it and the patch may sit on the component where the original feature had been removed. The rim may allow the patch with the new feature to be joined, e.g. sealed, onto the component in a manner similar to that described above, e.g. by welding or brazing. Once the seal between the patch and the component has been made, the process would then continue as previously mentioned, e.g. the patch may be diffusion bonded to the component. Only the sealing rim may then be removed instead of the above surface feature, and any heat treatment may be as specified for the patch.

## Claims

1. A method of repairing a component, the method comprising:
removing a damaged portion (12) of the component to expose a region (14) of the component;
providing a patch (20) having a rim (22) exceeding the dimensions of the exposed region;
placing the patch on the exposed region of the component such that the exposed region is covered by the patch and the rim is spaced apart from the exposed region;
joining the patch to the component around the rim of the patch; and
diffusion bonding the patch and the component together.

2. The method of claim 1, wherein the rim is spaced apart from the exposed region such that the step of joining the patch to the component does not substantially affect the exposed region.

3. The method of claim 1 or 2, wherein the step of joining the patch to the component around the rim of the patch is performed under a vacuum.

4. The method of any of claims 1 to 3 further comprising:
machining a recess in a damaged region of the component;
covering the recess with the patch; and
at least partially filling the recess with a portion (20') of the patch.

5. The method of claim 4, wherein the recess is completely filled by the patch.

6. The method of claim 4, wherein the recess is partially filled by the patch.

7. The method of claim 6, wherein the remainder of the recess is filled with a powder.

8. The method of any preceding claim, wherein a replacement feature of the component is provided on a surface of the patch.

9. The method of any preceding claim wherein the step of joining the patch to the component around a rim of the patch provides a fluid tight seal between the patch and component.

10. The method of any preceding claim, wherein the step of joining the patch to the component around a rim of the patch comprises welding or brazing the patch to the component.

11. The method of any preceding claim wherein the patch is made of the same material as the component.

12. The method of any preceding claim wherein the patch and the component are diffusion bonded together by Hot lsostatic Pressing (HIP).

13. The method of claim 12, wherein the patch and the component are bonded together used the same HIP cycle as originally used to manufacture the component.

14. The method of any preceding claim further comprising removing any excess material from the patch after diffusion bonding the patch and component together.

15. The method of any preceding claim further comprising heat treating the component and patch.
